(19) Europäisches Patentamt
European Patent Office
Office européen des brevets

(11) Publication number: 0 018 235
B1

(12) **EUROPEAN PATENT SPECIFICATION**

(45) Date of publication of patent specification: 26.01.83

(51) Int. Cl.[3]: C 01 B 3/36, C 01 B 3/50, C 21 B 13/00

(21) Application number: 80301317.6

(22) Date of filing: 23.04.80

(54) **Production of reducing gas for furnace injection.**

(30) Priority: 24.04.79 GB 7914201
24.04.79 GB 7914202

(43) Date of publication of application:
29.10.80 Bulletin 80/22

(45) Publication of the grant of the patent:
26.01.83 Bulletin 83/4

(84) Designated Contracting States:
BE DE FR GB IT NL SE

(56) References cited:
FR - A - 630 327
GB - A - 349 471
US - A - 3 072 469

(73) Proprietor: FOSTER WHEELER LIMITED
Foster Wheeler House Station Road
Reading Berkshire (GB)

(72) Inventor: Skinner, Geoffrey Frederick
7 Knowsley Close
Maidenhead Berkshire (GB)
Inventor: Maunder, Anthony Dwight
19 Fernbrook Caversham
Reading Berkshire (GB)

(74) Representative: Baldock, Hugh Charles et al,
Lloyd Wise, Tregear & Co. Norman House 105-109 Strand
London, WC2R 0AE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

# Production of reducing gas for furnace injection

This invention relates to a method for supplying a reducing gas to a furnace, e.g. a direct reduction furnace or a blast furnace. In a preferred embodiment the invention relates to a method for reducing iron ore to metallic iron in the solid state in a direct reduction furnace by a continuous process employing reducing gases mainly containing hydrogen, together with some carbon monoxide, the reducing gas being generated from hydrocarbon feedstocks, such as those heavier than naphtha or from coal by a process of partial oxidation using air as the oxidant.

There are several methods of direct reduction of iron ores utilizing various types of equipment in which the reduction of the iron ores takes place. Normally these processes are continuous as in the case of those of Purofer, Midrex and Armco. However batch processes, such as that of HyL, are also used. Reducing gas is generally produced by the steam reforming of desulphurised natural gas which produces a hot reducing gas which is sufficiently rich in carbon monoxide and hydrogen such that it is suitable for direct injection into the reduction equipment. In some cases exit gas from the top of the reduction equipment, which contains water and carbon dioxide as well as unused hydrogen and carbon monoxide, is cleaned and compressed and used as an oxidant to reform the hydrocarbon feed to produce more hydrogen and carbon monoxide. Other processes, such as partial oxidation, exist where heavy feedstocks are oxidised with oxygen, the gas made being cooled, quenched and the sulphur content reduced to produce a reasonably high purity reducing gas which is mixed with recycle gas which can be reheated to give hot gas suitable for injection into the reduction equipment. However, in this case the ratio of carbon monoxide to hydrogen is somewhat higher than that in the natural gas steam reforming method and problems in heating gases containing substantial quantities of CO can occur, in particular carbon deposition according to the Boudouard reaction:

$$2CO \rightarrow CO_2 + C$$

This causes difficulty in design of reliable heat exchange equipment which will not block and special heaters with high pressure drops are required.

The above reaction also contributes to carburisation of the product iron. Although some carburisation is desirable the levels achieved in many direct reduction plants of this type are higher than desired from the point of view of the subsequent iron product melting step.

In the conventional blast furnace process for production of iron from iron ores and concentrates, the primary reductant is metallurgical coke which is fed into the top of the furnace in layers with the ore. Preheated air blown into the tuyeres at the base of the furnace produces carbon monoxide by reaction with the descending stream of coke, which then reduces the iron ore through the oxide stages to produce liquid iron at the base. Carbon dioxide, unreacted carbon monoxide, and nitrogen from the injected air leave the top of the furnace.

The metallurgical coke supplied to blast furnaces must have special properties such as high crushing strength, which is necessary to maintain the porosity of the bed in the furnace, and to a lesser extent the coke must have a minimum amount of reactivity. Supplies of suitable coal necessary to make these special types of coke are not always available in sufficient quantities in some areas of the world, or, if they are, they are often expensive. Therefore, there is a demand to reduce the amount of metallurgical coke required by blast furnaces. A number of methods have been proposed including, raising air blast temperatures, injecting oil which in the past was a cheaper form of carbon into the blast furnace tuyeres, injecting pulverised coal in a similar manner or combination oil and coal, injecting hydrogen and carbon monoxide containing reducing gas (for example obtained by steam and/or carbon dioxide reforming of natural gas or light naphtha or by partial oxidation of heavier feeds with oxygen) into the tuyeres or high up the furnace into the bosh region above the tuyeres, and recycling blast furnace gas, after removal of carbon dioxide and water, into the tuyeres, the diluent effect of the contained nitrogen being offset by using oxygen-enriched air at the tuyeres.

Although considerable metallurgical coke savings are possible, all these schemes have certain limitations. In particular, the direct oil and coal injection schemes require heat input to balance the heat required to thermally crack the oil and/or coal at the base of the furnace and hence a higher blast temperature is required even with limited oil and/or coal injection.

The amount of injection of oil or solid fuels that can be introduced at the tuyeres has been found to be limited by operating difficulties in the furnaces, such as "hanging" and in the top gas cleaning equipment due to accumulation of soot.

Also, the injection of oil or solid fuel into the tuyeres with oxygen-enriched blast air has caused problems, in that the tuyeres have tended to burn away. The limitations of such proposals alone can be expressed in terms of the amount of oil or solid fuel that can be injected into the blast furnace, rather than in terms of the minimum amount of coke per se which is necessary for the blast furnace operation for reasons such as bed permeability.

It can be suggested that there is a degree of independence between oil or solid fuel injection at the tuyeres and reducing gas injection further up the shaft, in the sense that when the practical limit of oil or solid fuel injection has been reached it may still be possible to achieve a supplementary reduction in metallurgical coke consumption by injecting reducing gas at a higher point in the blast furnace. The reformer applications suffer from the disadvantage that it is only possible to directly reform light feedstocks such as natural gas or light naphtha and even indirect reforming processes (such as a combination of the "catalytic rich gas" process with steam reforming) are only able to handle slightly heavier feedstocks. All these are premium priced hydrocarbons in view of their high demand for chemicals production. There is also considerable reluctance to use the extremely large quantities of clean fuel such as natural gas as a blast furnace reductant. The partial oxidation of heavier oil feeds and coal require considerable quantities or oxygen which although available are not cheap.

The most economic and attractive route for saving metallurgical coke in the blast furnace by hydrocarbon substitution appears to be by the use of heavy residual oil or solid fuel such as coal, either for direct injection or for gasification and injecting without using oxygen.

United States Patent Specification US—A—3 072 469 discloses the generation of reducing gas suitable for direct reduction of solid metal oxides in which heavy hydrocarbon liquid is subjected to partial oxidation. The crude reducing gas is treated to remove free carbon and water and subjected to a further partial oxidation reaction to produce a reducing gas which is injected into a furnace. The reducing gas injected into the furance contains a large amount of nitrogen.

It is an object of the present invention to provide a process for the production of reducing gases which may be utilized in both direct reduction furnaces and blast furnaces.

Therefore according to the present invention there is provided a process for producing a reducing gas for a direct reduction furnace or blast furnace which comprises partially oxidising oil and/or coal and/or coke in the presence of air to produce a gas stream containing hydrogen and nitrogen together with other gases, treating the gas stream to remove some of the undesirable components and drying the gas stream, characterised in that substantially all gases other than hydrogen and nitrogen, are removed from the gas stream and the gas stream is subjected to a separation stage to separate a hydrogen-rich gas stream and a nitrogen-rich gas stream, the hydrogen-rich gas stream being heated and injected into the furnace.

The process of the invention is based on the fact that hydrogen and nitrogen mixtures can be separated with ease in view of the large difference in their properties. The simplest method of separating the gases is by cryogenic treatment although other separation methods which rely on the difference in molecular size of the gases, e.g. differential adsorption methods, or diffusivity, may also be used.

The preferred method of separating the nitrogen and hydrogen utilizes a cryogenic separator. The separator may use Joule Thomson cooling and regenerative heat exchange, low temperature work expanders, supplementary refrigeration or any combination thereof. Suitable cryogenic separators are well known and commercially available. The separated hydrogen which may contain a little nitrogen, leaves the cryogenic separator at a slightly lower pressure than its inlet pressure and is heated, expanded through a turbine, reheated and injected into the furnace at a suitable point. The power generated by the expansion of hydrogen may contribute to that required for the gas compressor used for the partial oxidation.

The nitrogen stream leaves the cryogenic separator at a somewhat lower pressure than its inlet pressure but nevertheless may still give useful power when heated and passed through an expansion turbine.

The method of the invention as applied to direct reduction furnaces produces hot reducing gases from heavy oil such as residual oils, or coal, suitable for injection into any of the existing types of direct reduction furnaces. The technical and economical advantages of this scheme are that no oxygen plant is required since the reducing gas is produced using air as the oxidant. This is of particular advantage in reducing investment and running costs, particularly in remote locations where units of limited capacity are involved. Other advantages are that little sensitive catalyst is required in contrast to the reformer method. Since the reducing gas produced that is heated is high in hydrogen and contains little carbon monoxide, problems of carbon deposition do not occur. Moreover according to one embodiment of the invention the carbon monoxide content of the reducing gas in parts of the direct reduction furnace itself can be adjusted independently and thus genuine control can be exercised over the carbon content in the product iron. Further advantages of the invention are due to the ability to build all the gas production steps if necessary on a very large scale thus permitting the centralisation of the gas generation steps where several or all direct reduction modules are required. Minimal steam generator facilities are required relative to the steam reformer fed plants.

The general process of the invention may be used to treat gas streams obtained by oxidation of carbonaceous materials, i.e. coal, oil, coke, with air to produce a suitable reducing gas and accordingly in the case of the blast furnace the source gas may be derived from the top gas to

the blast furnace or from partial oxidation of oil and/or coal. In either case the source gas is treated to remove undesirable components, the nitrogen and hydrogen separated and the hydrogen stream injected into the furnace.

The invention will now be described with reference to the accompanying drawings, in which:

Figure 1 represents a flow diagram of a system for the direct reduction of iron ore incorporating the process of the invention,

Figure 2 represents an open cycle gas turbine suitable for use in the invention,

Figure 3 represents a flow diagram of a blast furnace system incorporating the process of the invention in which the source gas is derived from the partial oxidation of coal and/or oil, and

Figure 4 represents a flow diagram of a blast furnace system incorporating the process of the invention in which the source gas is derived from the blast furnace top gas.

Referring to Figure 1, oil or coal or a combination thereof, air and steam are fed into a conventional partial oxidation reaction. The reaction is generally conducted at a pressure of up to 50 bar and at a temperature of 300 to 1000°C. The oxidation may be conducted at atmospheric pressure in which case the gas stream is pressurised at a later stage in the process. The resulting gas stream is passed to a quench/waste heat boiler and thereafter the carbon monoxide content is substantially eliminated by passing the gas over a conventional shift catalyst generally at a temperature of 200 to 500°C. The reaction which takes place leaving the reducing content of the gas unchanged is:

$$CO+H_2O \rightarrow CO_2+H_2.$$

Catalysts are available to promote this reaction which are tolerant to the levels of sulphur in the gas stream e.g. cobalt molybdate. Alternatively, the gas may be desulphurised prior to passage over the shift catalyst. In the former case the gas mixture containing hydrogen, nitrogen, carbon dioxide, methane, hydrogen sulphide and traces of carbon monoxide is then passed to an acid gas removal stage where carbon dioxide and hydrogen sulphide are removed. There are many types of processes for such gas removal for instance washing with hot potassium carbonate, e.g. at a temperature of 70 to 110°C, and the Rectisol process. The waste carbon dioxide may be vented to the atmosphere.

The gas mixture now containing hydrogen, nitrogen plus a little carbon monoxide and methane is then dried by cooling initially as far as possible and subsequently by contact with molecular sieve absorbent which also removes remaining traces of carbon dioxide. The dried gas is then passed to a cryogenic nitrogen/hydrogen separator, e.g. one which uses Joule Thomson cooling and regenerative heat exchange. The gas stream is contacted with heat exchange elements cooling the gas to about 100 K and condensing out the nitrogen. The amount of nitrogen removed may be varied according to the conditions in the separator, generally of the order of 90% of the original nitrogen content is removed.

The separated hydrogen stream, containing a little nitrogen, leaves the cryogenic separator at a lower pressure than at the inlet. The hydrogen stream may be simply heated and injected directly into the furnace. However, preferably the gas is passed through a heater to raise the temperature e.g. up to 1200°C, generally 500 to 750°C, then expanded through a turbine to generate power. The hydrogen is then reheated to a temperature of 1200°C, generally 700 to 950°C, preferably 750 to 900°C, and finally injected into the direct reduction furnace at a suitable point.

At least a portion of the liquid nitrogen which is condensed in the cryogenic separator may be used in a washing treatment for the gas stream as described above. This expedient obviates dependence on an external source of liquid nitrogen as in classical nitrogen wash plants.

The separated nitrogen stream, containing a little hydrogen plus most of the methane and carbon monoxide present in the feed, leaves the cryogenic separator at a somewhat lower pressure than at the inlet e.g. 5 to 20 bar, generally 5 to 10 bar, but sufficient to give useful power when heated and passed through an expansion turbine. Alternatively since it is available at pressure and contains combustibles, it may be used as supplementary fuel and working fluid for the expansion section of an open cycle gas turbine or simply for general fuel purposes. If the gas stream is too lean in combustibles catalytic combustion may also be employed.

The power generated by the expansion of the hydrogen and nitrogen streams as described may contribute to that required to drive the air compressor for the partial oxidation. In some cases the carbon dioxide removed may be obtained at pressure separately or with the waste nitrogen stream and gases may be heated and expanded to provide power.

In the event of the waste nitrogen being employed in an open cycle gas turbine, as mentioned above, the combustion air compressor of the turbine can be used as a first stage of the partial oxidation air compressor.

A bleed stream of carbon monoxide containing gas may be taken from before the shift stage previously mentioned and fed, preferably after treatment to remove the acid gas content, into the direct reduction furnace either preferably as cooling gas or with the hot gas previously mentioned. In the latter case the mixture of the two gas streams ideally takes place as soon as possible before injection to the furnace. The use of a bleed stream of carbon monoxide containing gas allows the carbon

monoxide content of the reducing gas in the direct reduction furnace to be adjusted and therefore the amount of carbon contained in the product iron may be controlled. The carbon content of the iron may also be adjusted by the addition of a small amount of solid carbon at a suitable stage in the furnace. The addition of this carbon increases the CO content at certain points in the furnace, this increases the carbon content of the product.

In addition, a stream of cold hydrogen gas from the cryogenic separation may also be used for cooling of the direct reduction furnace iron product if required.

The top gases from the direct reduction furnace which contain reducing gases may be passed to gas scrubbing and water removal and then compressed and recirculated. If desired the top gas may be recirculated through the acid gas removal and cryogenic condenser to provide an additional means of eliminating nitrogen and carbon dioxide from the shaft furnace gas circuit. Since the carbon monoxide proportion of this gas is generally fairly low it is possible for it to be passed through the gas heater when mixed with the fresh hydrogen from the cryogenic unit without risk of carbon deposition. In some cases these gases may be used elsewhere in particular to regulate the temperature of the hot hydrogen reducing gas, or cooling gas or as a fuel for the various gas heaters.

Figure 2 illustrates a suitable gas turbine system. The waste nitrogen may be heated to the turbine inlet temperature by indirect heat exchange and/or by direct combustion of its combustible content, i.e. traces of methane, hydrogen, carbon monoxide with supplementary air and additional fuel as required upstream of the turbine. In the embodiment shown the nitrogen is mixed with supplementary fuel and fed to the combustion chamber of the gas turbine as fuel. At the same time the process air requirement for the partial oxidation is bled from the gas turbine compressor discharge. By this expedient approximate parity is maintained between the mass flows in the compressor and expander sections of the gas turbine and an efficient means of compression and expansion provided using developed industrial equipment designs.

In the embodiment shown in Figure 3 the cryogenic principle previously mentioned is used to make a hydrogen-rich gas stream from heavy oil or coal for injection into a blast furnace but using air rather than oxygen as in prior art. Blast furnace gas is used as fuel within the blast furnace circuit and in the integrated steel works as in conventional practice. Oil or coal or a combination of the two, air and steam are fed to a proprietary type of partial oxidation unit generally operating at a pressure of 15 to 50 bar and a temperature of 30 to 1000°C. The gases leaving are passed to a quench/waste heat boiler stage and then to a sulphur tolerant shift reaction catalyst as mentioned previously to convert the carbon monoxide to hydrogen and carbon dioxide, e.g. cobalt molybdate. Alternatively the gas may be desulphurised prior to passage over the shift catalyst. The gas mixture containing hydrogen, carbon dioxide, nitrogen, hydrogen sulphide with traces of carbon monoxide then undergoes a series of treatment stages as described above with reference to Figure 1.

The separated hydrogen-rich gas is fed via a heater, expander and reheater into the blast furnace. The separated nitrogen-rich gas is heated and expanded and fed to a gas turbine. The power generated by the expansion contributes typically to driving the air compressor for the partial oxidation gasifier.

In some cases the carbon dioxide removed may be obtained at pressure, either separately from or mixed with the waste nitrogen stream and thus be heated and expanded to provide power.

If the separated nitrogen used is in the expander of an open cycle gas turbine, the combustion air compressor of that gas turbine can be used advantageously as the first stage of the partial oxidation process air compressor.

This scheme enables production of reducing gas from oil without using oxygen supplied in considerable quantities from an air separation plant. In the past when partial oxidation techniques have been used in blast furnace systems to make reducing gas for injection, oxygen has been used. Moreover, although in prior art the product from oxygen fed partial oxidation units being hot may be injected directly into the blast furnace, the reducing potential of such gases is much smaller than that of the gas injected according to this invention, in view of the considerable carbon dioxide and water contents. Comparable quench, shift, acid gas removal and reheat steps must follow in order to produce a high reducing potential gas by partial oxidation with oxygen.

In the blast furnace system illustrated in Figure 4 gas from the top of the blast furnace is collected and cleaned in scrubbers and electrostatic precipitators and passed to a gas holder as in conventional practice. Gas from the holder predominantly containing nitrogen, carbon dioxide, carbon monoxide, hydrogen and water vapour is compressed to a pressure generally from 10 to 50 bars, preferably about 25 bars, some water vapour is added and the carbon monoxide content is substantially eliminated by passing the gas over a conventional shift catalyst as described in relation to Figure 1.

The resulting gas stream then undergoes a series of treatment stages as shown in Figure 4 which are fully described above with reference to Figure 1. However, the gas stream does not contain sulphur, and the shift catalyst need not be sulphur tolerant and this is removed in the acid gas removal stage.

The resulting hydrogen stream is heated and

injected into the blast furance at a suitable point.

It will be seen that any hydrogen injected into the blast furnace according to this embodiment which passes unchanged out of the top of the furnace shaft is not lost to the furnace but is recycled to it.

Since the top gas leaving the blast furnace according to this embodiment will contain appreciable water vapour whereas in normal practice there is little or none, some improvement in the reducing quality of the top gas can be achieved by just cooling the top gas to condense most of this water. Accordingly it is possible to achieve most of the beneficial effect of processing all the top gas as described in this invention, by processing part of the cooled top gas to produce injected hydrogen as described above and by injecting the remainder of the cooled top gas after compression and reheating directly into the blast furnace, such reheating preferably being along with the hydrogen injected to reduce the danger of carbon deposition in the heater.

Any deficiency in overall works fuel supply resulting from the use of the top gas may be made good by the combustion of gas, oil or coal from external sources. However, in some instances it may be desirable to utilize a portion of the blast furnace top gas as a fuel, e.g. in the hot gas stoves as indicated in Figure 4.

The optimum point of injection of the reducing hydrogen gas can be chosen purely from the aspect of optimum blast furnace performance. This is advantageous over the prior art, in which recycled top gas containing nitrogen is injected, requiring an unusually high degree of oxygen enrichment of the blast at the tuyeres in compensation. To avoid excessively high temperatures in the tuyere region, the recycle gas in that prior art must at least in part be injected at the tuyeres.

Since the hydrogen concentration in the shaft gas may be higher in this embodiment than in other prior art reducing gas injection processes, the iron production rates may be increased. In addition, gas pressure losses will be less at a given production rate both because of the low molecular weight of gas in the shaft and because of the lower amounts of blast air required with reducing gas injection relative to other practices. Thus capacity of the blast air system should provide no obstacle to any increase in production rate.

It is believed that, due to the nature of the maximum limitations on the amount of the tuyere injection of oil/solid fuel and the inherent minimum in the amount of metallurgical coke feed, it is still advantageous to maximize tuyere injection in combination with hydrogen injection at an optimum point to achieve a further decrease in coke consumption compared with prior art. The effect of hydrogen injection may be thought of as equivalent to the use of a prereduced iron ore feed to the blast furnace proper.

It will be readily appreciated that a combination of both embodiments for the blast furnace may be employed in which further reducing gas supplied by partial oxidation of oil or coal and a portion of top gas may be recycled.

In all of the processes illustrated in the drawings the various gas heaters are illustrated separately. In practice all of the gases may be readily heated in a single furnace.

**Claims**

1. A process for producing a reducing gas for a direct reduction furnace or blast furnace which comprises partially oxidizing oil and/or coal and/or coke in the presence of air to produce a gas stream containing hydrogen and nitrogen together with other gases, treating the gas stream to remove some of the undesirable components and drying the gas stream, characterised in that substantially all gases other than hydrogen and nitrogen are removed from the gas stream and the gas stream is subjected to a separation stage to separate a hydrogen-rich gas stream and a nitrogen-rich gas stream, the hydrogen-rich gas stream being heated and injected into the furnace.

2. A process as claimed in Claim 1, characterised in that the separation stage is conducted in a cryogenic separator.

3. A process as claimed in Claim 2, characterised in that the hydrogen-rich gas stream leaving the cryogenic separator is heated and expanded through a turbine to generate power and the nitrogen-rich stream leaving the cryogenic separator is heated and expanded through a turbine to generate power.

4. A process as claimed in any preceding claim, characterised in that the gas stream resulting from the partial oxidation is passed over a shift catalyst at elevated temperature to convert the carbon monoxide and water present in the gas stream to carbon dioxide and hydrogen.

5. A process as claimed in any preceding claim, characterised in that the gas stream is subjected to scrubbing with hot potassium carbonate to remove the acid gas content prior to the separation stage.

6. A process for the direct reduction of iron ore, characterised in that the reducing gas which is injected into the furnace is obtained by partial oxidation of coal and/or oil by a process as claimed in any preceding claim.

7. A process as claimed in Claim 6, characterised in that a secondary gas stream containing carbon monoxide is bled from the gas stream after partial oxidation and injected into the direct reduction furnace to regulate the carbon content of the product iron.

8. A process as claimed in Claim 7 or Claim 8, characterised in that a small amount of solid

carbon is added to the direct reduction furnace to regulate the carbon content of the product iron.

9. A process as claimed in any one of Claims 6 to 8, characterised in that top gas from the furnace is recirculated through an acid gas removal stage and cryogenic separator and thence back to the furnace.

10. A method of operating a blast furnace, characterised in that a gas stream obtained by a process as claimed in any one of Claims 1 to 5, is injected into the blast furnace and in that top gas from the blast furnace is treated to remove particulate matters and thereafter purified and separated by a process as claimed in any one of Claims 1 to 6, the hydrogen-rich stream being injected into the blast furnace.

**Patentansprüche**

1. Verfahren zur Herstellung eines reduzierenden Gases für einen Ofen zum unmittelbaren Reduzieren oder einen Hochofen, wobei man Öl und bzw. oder Kohle und bzw. oder Koks in Gegenwart von Luft teilweise oxydiert, um einen Gasstrom herzustellen, der Wasserstoff und Stickstoff zusammen mit anderen Gasen enthält, daß man den Gasstrom einer Behandlung zum Entfernen eines Teils der unerwünschten Bestandteile unterzieht und den Gasstrom trocknet, dadurch gekennzeichnet, daß man praktisch sämtliche Gase außer Wasserstoff und Stickstoff von dem Gasstrom entfernt und den Gasstrom einer Trennungsbehandlung unterwirft, um ihn in einen wasserstoffreichen und einen stickstoffreichen Gasstrom aufzutrennen, und daß man den wasserstoffreichen Gasstrom erhitzt und in den Ofen einbläst.

2. Verfahren gemäß Anspruch 1, dadurch gekennzeichnet, daß man die Trennungsbehandlung in einem Tiefsttemperaturabscheider durchführt.

3. Verfahren gemäß Anspruch 2, dadurch gekennzeichnet, daß man den wasserstoffreichen Gasstrom und den stickstoffreichen Gasstrom, der den Tiefsttemperaturabscheider verläßt, erhitzt und durch eine Turbine expandieren läßt, um Energie zu gewinnen.

4. Verfahren gemäß einem der vorhergehenden Ansprüche, dadurch gekennzeichnet, daß man den Gasstrom aus der partiellen Oxydation bei erhöhter Temperatur über einen Verschiebungskatalysator (shift catalyst) leitet, um das Kohlenmonoxid und das Wasser, die in dem Gasstrom vorhanden sind, in Kohlendioxid und Wasserstoff zu überführen.

5. Verfahren gemäß einem der vorhergehenden Ansprüche, dadurch gekennzeichnet, daß man den Gasstrom einer Wäsche mit heißem Kaliumcarbonat unterwirft, um vor dem Auftrennen die darin enthaltenen Säuren zu entfernen.

6. Verfahren zum unmittelbaren Reduzieren von Eisenerz, dadurch gekennzeichnet, daß man ein reduzierendes Gas in den Ofen einbläst, das durch Teiloxydation von Kohle und bzw. oder Öl nach einem Verfahren gemäß einem der vorhergehenden Ansprüche erhalten worden ist.

7. Verfahren gemäß Anspruch 6, dadurch gekennzeichnet, daß man einen Sekundärgasstrom, der Kohlenmonoxid enthält, von dem Gasstrom nach der Teiloxydation abzweigt und in den Ofen zur unmittelbaren Reduktion einbläst, um den Kohlenstoffgehalt des erzeugten Eisens zu steuern.

8. Verfahren gemäß Anspruch 7 oder 8, dadurch gekennzeichnet, daß man dem Ofen zum unmittelbaren Reduzieren eine geringe Menge festen Kohlenstoffs zuführt, um den Kohlenstoffgehalt des hergestellten Eisens zu steuern.

9. Verfahren gemäß einem der Ansprüche 6 bis 8, dadurch gekennzeichnet, daß man das Gichtgas von dem Ofen durch eine Säureentfernungsstufe und einen Tiefsttemperaturabscheider und von das aus zum Ofen zurückführt.

10. Verfahren zum Betreiben eines Hochofens, dadurch gekennzeichnet, daß man einen Gasstrom, der nach einem Verfahren gemäß einem der Ansprüche 1 bis 5 erhalten worden ist, in den Hochofen einbläst und das Gichtgas von dem Hochofen einer Behandlung zum Entfernen von teilchenförmigen Materialien unterzieht und anschließend reinigt und nach einem Verfahren gemäß einem der Ansprüche 1 bis 6 auftrennt, wobei man den wasserstoffreichen Strom in den Hochofen einbläst.

**Revendications**

1. Procédé de préparation d'un gaz réducteur pour un four ou haut fourneau de réduction directe, qui consiste à oxyder partiellement du pétrole et/ou du charbon et/ou du coke en présence d'air pour produire un courant gazeux contenant de l'hydrogène et de l'azote avec d'autres gaz, à traiter le courant gazeux en vue d'éliminer certains des composants indésirables et à sécher le courant gazeux, caractérisé en ce que pratiquement tous les gaz autres que l'hydrogene et l'azote sont éliminés du courant gazeux et en ce que le courant gazeux est soumis a une étape de séparation en vue de séparer un courant gazeux riche en hydrogène et un courant gazeux riche en azote, le courant gazeux riche en hydrogène étant chauffé et injecté dans le four.

2. Procédé selon la revendication 1, caractérisé en ce que l'étape de séparation est réalisée dans un séparateur cryogénique.

3. Procédé selon la revendication 2, caractérisé en ce que le courant gazeux riche en hydrogène sortant du séparateur cryogénique est chauffé et détendu dans une turbine pour produire de l'énergie et en ce que le courant riche en azote sortant du séparateur cryogénique est chauffé et détendu dans une turbine pour produire de l'énergie.

4. Procédé selon l'une quelconque des revendications précédentes, caractérisé en ce que le courant gazeux résultant de l'oxydation partielle est envoyé sur un catalyseur de transformation à température élevée pour convertir l'oxyde de carbone et l'eau présents dans le courant gazeux en dioxyde de carbone et en hydrogène.

5. Procédé selon l'une quelconque des revendications précédentes, caractérisé en ce que, préalablement à l'étape de séparation, le courant gazeux est soumis à une épuration au moyen de carbonate de potassium chaud pour éliminer les gaz acides.

6. Procédé de réduction directe du minerai de fer, caractérisé en ce que le gaz réducteur injecté dans le four est obtenu par oxydation partielle du charbon et/ou du pétrole par mise en oeuvre d'un procédé conforme à l'une quelconque des revendications précédentes.

7. Procédé selon la revendication 6, caractérisé en ce qu'un courant gazeux secondaire contenant de l'oxyde de carbone est prélevé sur le courant gazeux après oxydation partielle et injecté dans le four de réduction directe pour régler la teneur en carbone du fer produit.

8. Procédé selon la revendication 7 ou 8, caractérisé en ce qu'une petite quantité de carbone solide est ajoutés dans le four de réduction directe pour régler la teneur en carbone du fer produit.

9. Procédé selon l'une quelconque des revendications 6 à 8, caractérisé en ce que du gaz de la partie supérieure du four est recyclé dans une étape d'élimination des gaz acides et dans un séparateur cryogénique et ainsi ramené dans le four.

10. Procédé pour faire fonctionner un haut fourneau, caractérisé en ce qu'il consiste à injecter dans ledit haut fourneau un courant gazeux obtenu par un procédé conforme à l'une quelconque des revendications 1 à 5 et en ce que du gaz de la partie supérieure du haut fourneau est traité pour éliminer des matières particulaires puis purifié et séparé par un procédé conforme à l'une quelconque des revendications 1 à 6, le courant riche en hydrogène étant injecté dans le haut fourneau.

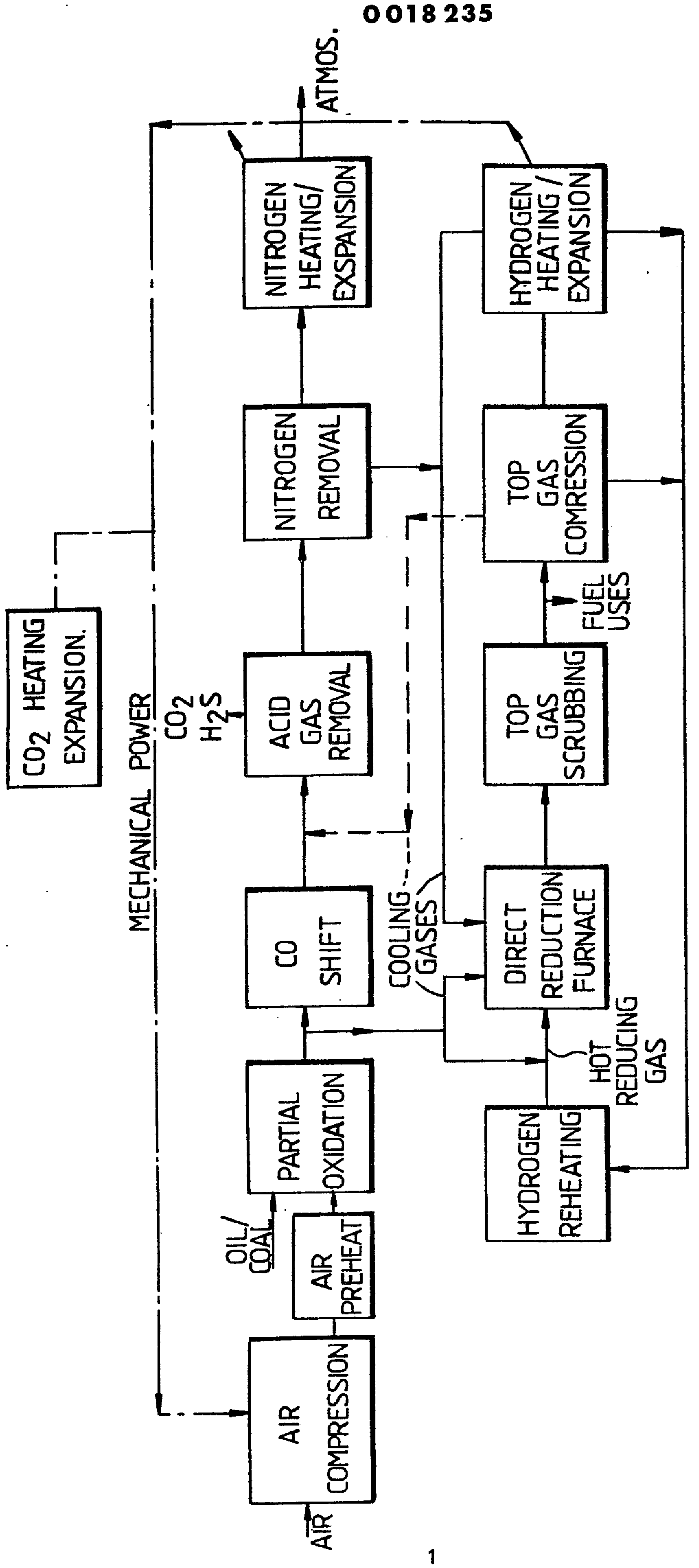
AIR
AIR COMPRESSION
AIR PREHEAT
OIL/ COAL
PARTIAL OXIDATION
CO SHIFT
ACID GAS REMOVAL
$CO_2$
$H_2S$
NITROGEN REMOVAL
NITROGEN HEATING/ EXSPANSION
ATMOS.
MECHANICAL POWER
$CO_2$ HEATING EXPANSION.
COOLING GASES
DIRECT REDUCTION FURNACE
HOT REDUCING GAS
HYDROGEN REHEATING
TOP GAS SCRUBBING
FUEL USES
TOP GAS COMRESSION
HYDROGEN HEATING / EXPANSION

*Fig.1*

Fig. 2

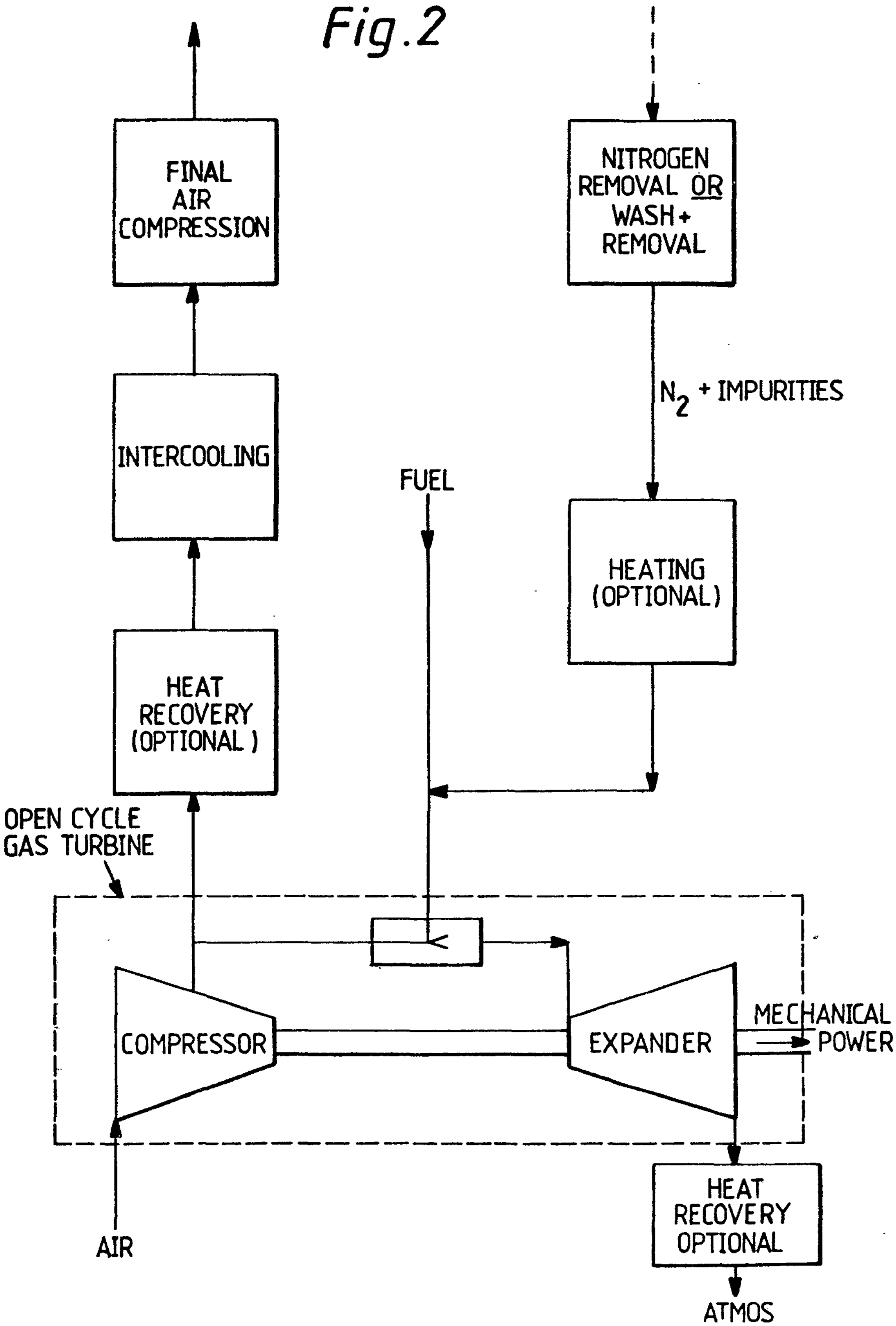
FINAL AIR COMPRESSION
NITROGEN REMOVAL OR WASH + REMOVAL
$N_2$ + IMPURITIES
INTERCOOLING
FUEL
HEATING (OPTIONAL)
HEAT RECOVERY (OPTIONAL)
OPEN CYCLE GAS TURBINE
COMPRESSOR
EXPANDER
MECHANICAL POWER
HEAT RECOVERY OPTIONAL
AIR
ATMOS

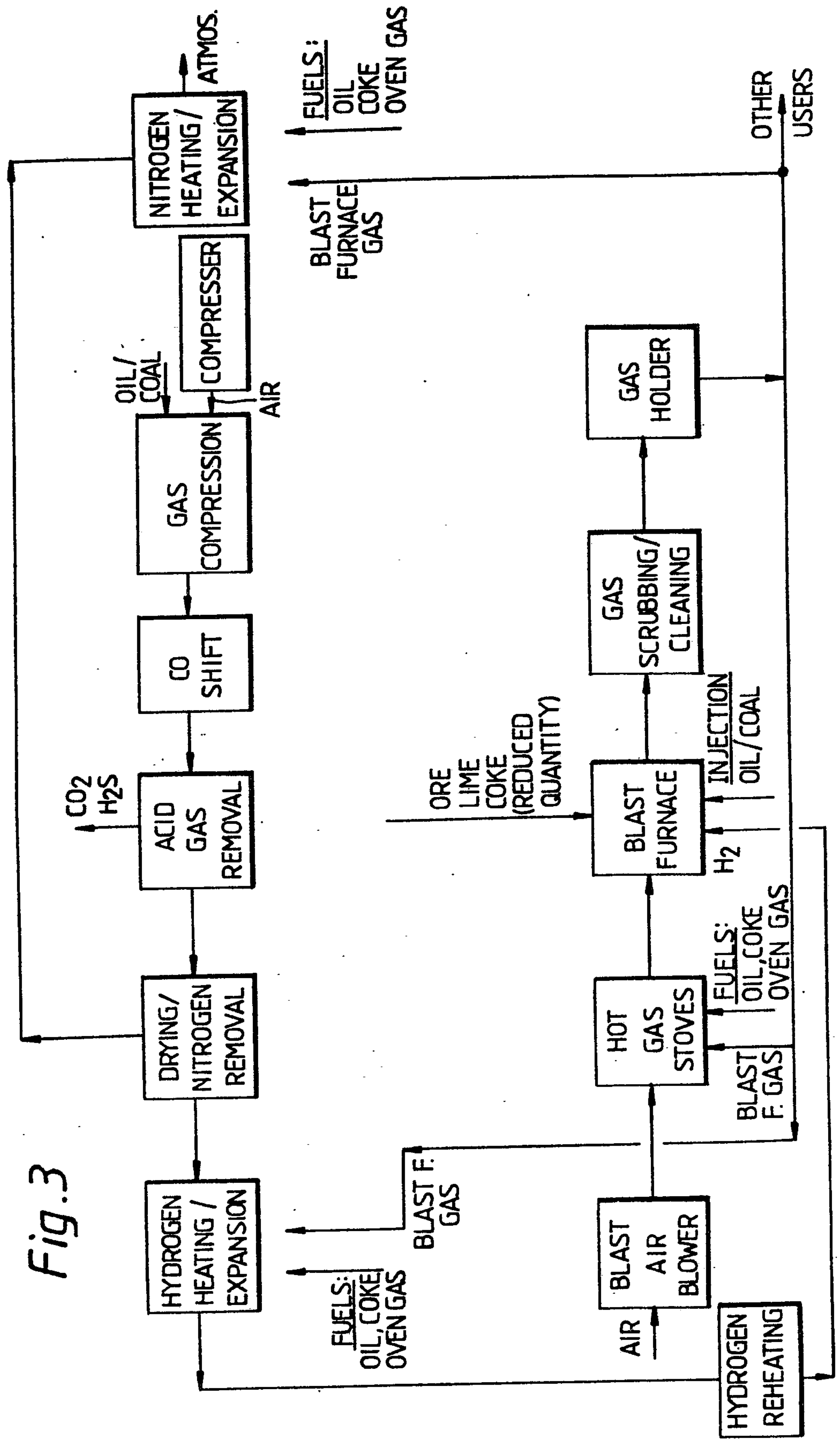
NITROGEN HEATING/ EXPANSION
ATMOS.
COMPRESSER
AIR
OIL/ COAL
GAS COMPRESSION
CO SHIFT
ACID GAS REMOVAL
$CO_2$ $H_2S$
DRYING/ NITROGEN REMOVAL
HYDROGEN HEATING / EXPANSION
FUELS: OIL COKE OVEN GAS
BLAST FURNACE GAS
OTHER USERS
GAS HOLDER
GAS SCRUBBING/ CLEANING
INJECTION OIL/COAL
ORE LIME COKE (REDUCED QUANTITY)
BLAST FURNACE
$H_2$
FUELS: OIL,COKE OVEN GAS
HOT GAS STOVES
BLAST F. GAS
BLAST F. GAS
FUELS: OIL,COKE, OVEN GAS
BLAST AIR BLOWER
AIR
HYDROGEN REHEATING

Fig.3

Fig. 4

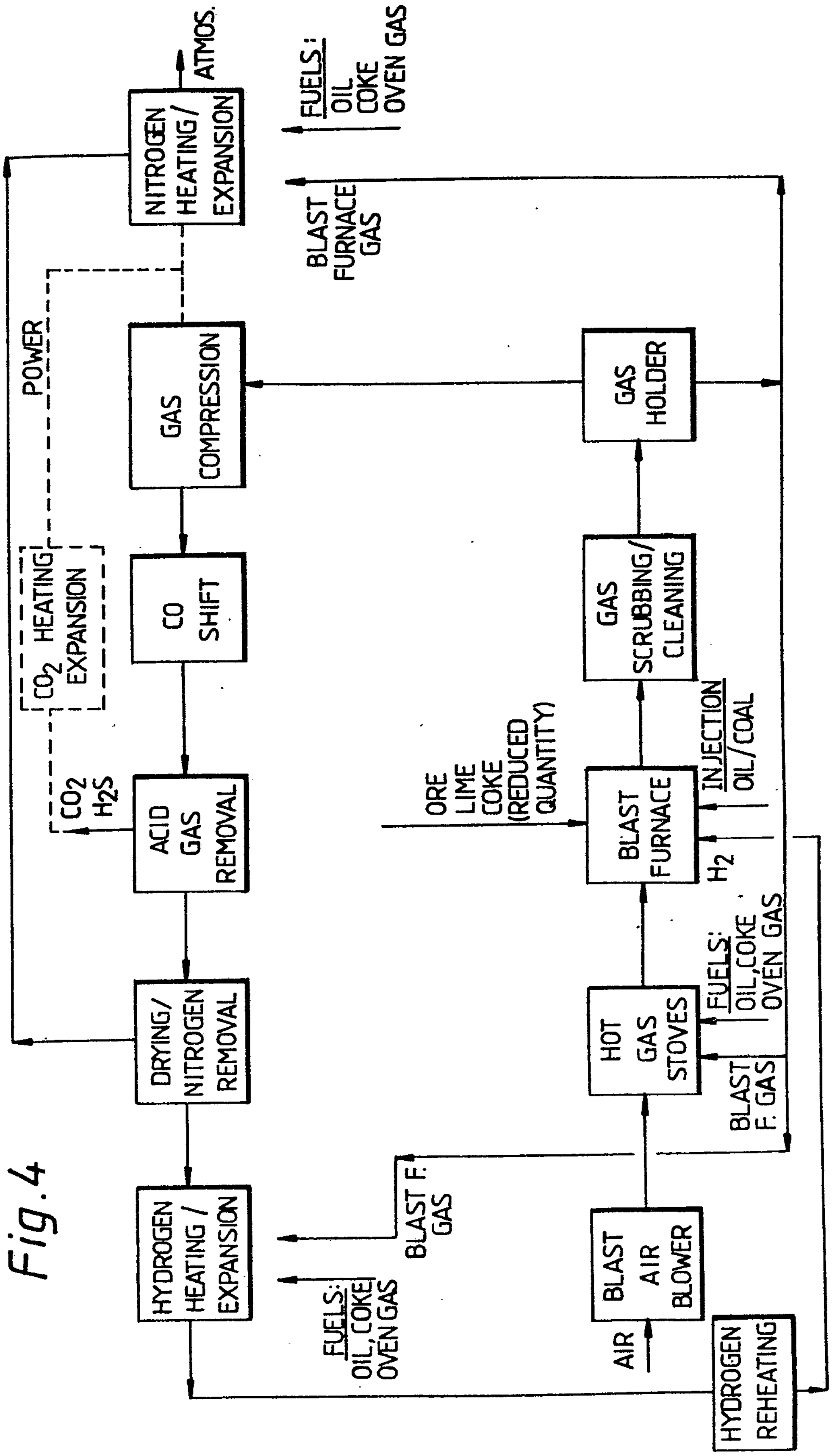

NITROGEN HEATING/ EXPANSION
ATMOS.
FUELS: OIL COKE OVEN GAS
BLAST FURNACE GAS
POWER
GAS COMPRESSION
GAS HOLDER
CO SHIFT
$CO_2$ HEATING EXPANSION
GAS SCRUBBING/ CLEANING
ACID GAS REMOVAL
$CO_2$ $H_2S$
ORE LIME COKE (REDUCED QUANTITY)
BLAST FURNACE
INJECTION OIL/COAL
$H_2$
DRYING/ NITROGEN REMOVAL
HOT GAS STOVES
FUELS: OIL, COKE OVEN GAS
BLAST F. GAS
HYDROGEN HEATING / EXPANSION
BLAST F. GAS
FUELS: OIL, COKE OVEN GAS
BLAST AIR BLOWER
AIR
HYDROGEN REHEATING